# EUROPÄISCHE PATENTSCHRIFT

(11) **EP 0 785 346 B1**
(45) Veröffentlichungstag und Bekanntmachung des Hinweises auf die Patenterteilung: **02.04.2003**
(21) Anmeldenummer: 96119407.3
(22) Anmeldetag: 04.12.1996
(51) Int. Cl.: F02B 17/00, F02B 5/02

(54) **Verfahren zum Betrieb eines Verbrennungsmotors**
Method of operating an internal combustion engine
Procédé de fonctionnement d'un moteur à combustion interne

(30) Priorität: 20.01.1996 DE 19602065
(43) Veröffentlichungstag der Anmeldung: 23.07.1997
(73) Patentinhaber: DaimlerChrysler AG, 70567 Stuttgart (DE)
(72) Erfinder: Enderle, Christian, 73666 Baltmannsweiler (DE); Krämer, Stephan, 71397 Leutenbach (DE); Pischinger, Stefan, Dr., 71336 Waiblingen (DE); Rössler, Klaus, 73733 Esslingen (DE)

(56) Entgegenhaltungen:
- EP-A- 0 661 432
- DE-A- 19 519 663
- FR-A- 2 669 377
- US-A- 4 621 599
- US-A- 5 078 107

## Beschreibung

Die Erfindung bezieht sich auf ein Verfahren zum Betrieb eines fremdgezündeten 4-Takt-Verbrennungsmotors, im Schichtbetrieb.

Aus der Patentschrift CH 570 545 ist ein Verfahren zum Betrieb eines fremdgezündeten 4-Takt-Verbrennungsmotors bekannt, bei dem während einer jeweiligen Kompressionshubphase zunächst ein Hauptkraftstoffmenge und danach eine Zündkraftstoffmenge direkt in einen Brennraum eingespriht werden, wobei die Hauptkraftstoffmenge intermittierend zu einem im Anfangsteil des Kompressionshubes liegenden Zeitpunkt eingespritzt wird.

Bekanntlich beeinflussen Streuungen in der Dauer und dem Zeitpunkt der Entflammungsphase bei Verbrennungsvorgängen in Motorbrennräumen die Lage der nachfolgenden Umsetzungsphase und damit den Wirkungsgrad der Verbrennung und die Laufruhe des Motors. Der Zustand des Kraftstoff/Luft-Gemischs hinsichtlich Kraftstoffkonzentration und Strömung zum Zündzeitpunkt im Bereich der Zündkerze haben bei fremdgezündeten Motoren, wie beispielsweise einem 4-Takt-Ottomotor mit Direkteinspritzung in einen ungeteilten Brennraum, einen wesentlichen Einfluß auf die Entflammung.

Der Erfindung liegt als technisches Problem die Bereitstellung eines Verfahrens der eingangs genannten Art zugrunde, mit dem eine sichere Entflammung bei guter Kraftstoffgemischaufbereitung erreicht wird.

Dieses Problem wird durch ein Verfahren mit den Merkmalen des Anspruchs 1 gelöst. Durch die Trennung der gesamten, einzuspritzenden Kraftstoffmenge in die Hauptkraftstoffmenge und die später eingespritzte Zündkraftstoffmenge lässt sich die gewünschte stabile Entflammung bei guter Kraftstoffaufbereitung erreichen, wobei die beiden Mengen zeitversetzt während des Kompressionshubes eingespritzt werden. Dadurch liegen zum Zündzeitpunkt zwei Ladungswolken unterschiedlicher Größe und Zusammensetzung vor. Die Einspritzung der Hauptkraftstoffmenge erfolgt zeitlich vor derjenigen der Zündkraftstoffmenge, wobei der Zeitpunkt der Hauptkraftstoffmengeneinspritzung so zu wählen ist, dass der Kraftstoff möglichst gut aufbereitet wird, ohne dass die Zündgrenzen überschritten werden'. Es zeigt sich, dass hierzu besonders die Maßnahme beiträgt, mit dem Einspritzen der Hauptkraftstoffmenge nicht bereits im Anfangsteil des Kompressionshubes zu beginnen, sondern erst später, konkret nicht vor Ablauf eines Teils des gesamten Kompressionshubes, der wenigstens etwa 3/10 des gesamten Kompressionshubes beträgt und mit fallender Motorlast ansteigt. Damit ist es möglich, im Zündzeitpunkt im Bereich der Zündkerze optimale Bedingungen in Form eines im wesentlichen stöchiometrischen Kraftstoff/Luft-Gemischverhältnisses mit hohem Strömungszustand zu erzeugen. Die relativ späte Einspritzung der Hauptkraftstoffmenge während des Kompressionshubes und die anschließende Zündkraftstoffmengeneinspritzung führen zur Bildung von Gemischschichtungen, wobei die Schichtung der Haupteinspritzmenge in jedem Last- und Drehzahlbereich des Motors an den Bereich der Schichtung der Zündeinspritzmenge angrenzt oder mit diesem überlappt. Eine sichere Entflammung über den gesamten Last- und Drehzahlbereich des Motors hinweg lässt sich dabei durch Abstimmen von Menge und Zeitraum der Zündkraftstoffeinspritzung und Auslösen der Kraftstoffzündung unmittelbar nach oder bevorzugt noch während der Einspritzung der Zündkraftstoffmenge erreichen.

Bei dem nach Anspruch 2 weitergebildeten Verfahren wird mit der Einspritzung der Zündkraftstoffmenge erst relativ kurz vor dem Ende des Kompressionshubes begonnen, konkret nicht vor Ablauf von wenigstens 7/9 des gesamten Kompressionshubes. Der Einspritzbeginn für die Zündkraftstoffmenge wird dabei im allgemeinen motorlastunabhängig gewählt.

Bei dem Verfahren nach Anspruch 3 beginnt die Einspritzung der Zündkraftstoffmenge bereits relativ kurz nach dem Ende der Hauptkraftstoffmengeneinspritzung, konkret zu einem Zeitpunkt, der um weniger als etwa 1/10 des gesamten Kompressionshubes nach dem Einspritzende der Hauptkraftstoffmenge liegt.

Es zeigt sich, daß das Zünden des Kraftstoff/Luft-Gemisches während oder kurz nach der Einspritzung der Zündkraftstoffmenge vorteilhaft ist, wie beim Verfahren nach Anspruch 4 vorgesehen.

Eine bevorzugte Ausführungsform der Erfindung wird nachfolgend unter Bezugnahme auf die Zeichnungen beschrieben, in denen zeigen:
- Fig. 1: eine schematische Längsschnittansicht des oberen Bereichs einer Kolben-Zylinder-Einheit eines 4-Takt-Ottomotors und
- Fig. 2: ein Diagramm zur Veranschaulichung des Einspritzverlaufs von Haupt- und Zündkraftstoffmenge in Abhängigkeit von der Motorlast.

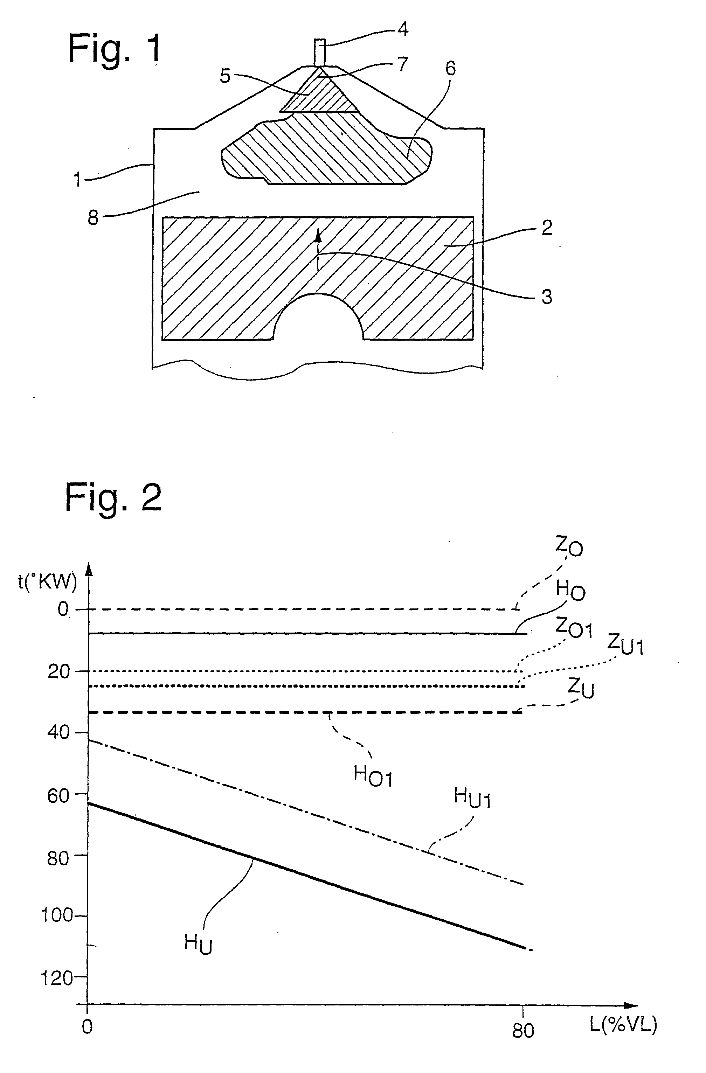

In Fig. 1 ist schematisch der obere Teil einer Kolben-Zylinder-Einheit eines 4-Takt-Ottomotors mit Direkteinspritzung in einen ungeteilten Brennraum dargestellt. Die Kolben-Zylinder-Einheit beinhaltet wie üblich einen in einem Zylinder (1) axial beweglich geführten Hubkolben (2), wobei die Axialrichtung des Kompressionshubes mit einem Pfeil (3) angegeben ist. An dem oberen Stirnende des Zylinders (1) ist mittig eine Kraftstoffeinspritzdüse (4) positioniert, mit welcher der im ungeteilten Brennraum (8) zu verbrennende Kraftstoff direkt in letzteren eingespritzt wird. Der Motor wird damit voll entdrosselt, d.h. qualitätsgeregelt betrieben. Die Kraftstoffeinspritzung beginnt jeweils erst merklich nach Beginn eines jeweiligen Kompressionshubes dergestalt, daß zunächst eine größere Hauptkraftstoffmenge und erst danach eine geringere Zündkraftstoffmenge eingespritzt werden. Durch die ausschließliche Kraftstoffeinspritzung während des Verdichtungshubes wird eine Ladungsschichtung des eingespritzten Kraftstoffes erzielt. Dabei bildet sich aus der zuerst eingespritzten Hauptkraftstoffmenge eine ausgedehntere, schematisch gezeigte Hauptmengen-Gemischwolke (6) und aus der später eingespritzten Zündkraftstoffmenge eine kleinvolumigere Zündmengen-Gemischwolke (7). Der Einspritzvorgang wird so gesteuert, daß sich die beiden Gemischwolken zum Zündzeitpunkt überlappen oder jedenfalls aneinander angrenzen. Die Zündung des eingesprizten Kraftstoffs erfolgt durch eine Zündkerze (5), deren Position im Brennraum (8) nicht angedeutet ist, wobei durch die Art der Einspritzung dafür gesorgt ist, daß zum Zündzeitpunkt im Bereich der Zündkerze ein stöchiometrisches oder jedenfalls annähernd stöchiometrisches Kraftstoff/Luft-Gemisch vorliegt. Da sich die Lage, Ausbreitung und Zusammensetzung der während des Kompressionshubes eingespritzen Ladungsschichtung der Hauptkraftstoffmenge in Abhängigkeit von Last und Drehzahl des Motors ändern, wird bei der Steuerung des Einspritzvorgangs die momentane Motorlast und Drehzahl berücksichtigt.

Anhand von Fig. 2 wird nachfolgend detaillierter auf die Steuerung des Einspritzvorgangs eingegangen, wobei als Maß für den Zeitverlauf (t) während eines Einspritzvorgangs die Kurbelwellenstellung für den Kolben (2) gemessen in Grad Kurbelwellenwinkel (°KW) vor dem oberen Totpunkt verwendet wird. Ein Kompressionshub dauert folglich von 180°KW bis 0°KW. Auf der Abszisse des Diagramms von Fig. 2 ist die Motorlast (L) in Prozent der Vollast (VL) abgetragen. Der Bereich möglicher Zeiträume für die Einspritzung der Hauptkraftstoffmenge ist in Richtung früh durch eine untere Grenzkurve (Hᵤ) und in Richtung spät durch eine obere Grenzkurve (Hₒ) begrenzt. Wie aus Fig. 2 ersichtlich, verläuft die untere Grenzkurve (Hᵤ) mit steigender Motorlast fallend, d.h. mit sinkender Motorlast (L) wird der frühest mögliche Einspritzbeginn für die Hauptkraftstoffmenge in Richtung spät verschoben. Ersichtlich liegt der Einspritzbeginn selbst bei hoher Motorlast stets bei Kurbelwellenwinkeln von weniger als 125° vor dem oberen Totpunkt, also erst bei einem Zeitpunkt, zu dem der Kolben (2) bereits wenigstens etwa 3/10 seines Kompressionshubes zurückgelegt hat. Im motorlastfreien Betrieb liegt der frühest mögliche Einspritzbeginn der Hauptkraftstoffmenge bei nur etwas mehr als 60°KW vor dem oberen Totpunkt.

Mit der motorlastabhängigen Wahl des Einspritzbeginns der Hauptkraftstoffmenge wird erreicht, daß zum Zündzeitpunkt unabhängig von der jeweils momentanen Last und Drehzahl des Motors ein möglichst stöchiometrisches Kraftstoff/Luft-Gemisch als geschichtete Ladung mit hohem Strömungszustand besonders auch im Bereich der Zündkerze vorhanden ist. Es versteht sich, daß dabei unter möglichst guter Kraftstoffaufbereitung die Zündgrenzen nicht überschritten werden und außerdem gewährleistet wird, daß die Lage der Schichtung der eingespritzten Hauptkraftstoffmenge in jedem Last- und Drehzahlzustand an den Bereich der Schichtung der anschließend eingespritzen Zündkraftstoffmenge zumindest angrenzt. Die obere Grenzkurve (Hₒ), die das spätest mögliche Ende der Hauptkraftstoffmengeneinspritzung markiert, wird motorlastunabhängig vorgegeben und liegt bei ca. 9° KW vor dem oberen Totpunkt.

In analoger Weise ist im Diagramm von Fig. 2 der mögliche Zeitraumbereich für die Einspritzung der Zündkraftstoffmenge durch eine untere Grenzkurve (Zᵤ) und eine obere Grenzkurve (Zₒ) markiert, die gestrichelt wiedergegeben sind. Beide Kurven (Zᵤ, Zₒ) verlaufen horizontal und damit motorlastunabhängig, wobei die den frühest möglichen Beginn der Zündkraftstoffmengeneinspritzung repräsentierende untere Grenzkurve (Zᵤ) bei ca. 34°KW vor dem oberen Totpunkt und die obere, das spätest mögliche Ende der Zündkraftstoffmengeneinspritzung repräsentierende Grenzkurve (Zₒ) kurz vor dem oberen Totpunkt liegt. Dies bedeutet, daß mit der Einspritzung der Zündkraftstoffmenge nicht vor Ablauf von wenigstens 7/9 des gesamten Kompressionshubes begonnen wird.

Aus den beiden Zeitbereichen für die Hauptkraftstoffmengeneinspritzung und die Zündkraftstoffmengeneinspritzung werden abgestimmt auf den jeweiligen Anwendungsfall die jeweils am besten geeigneten Einspritzzeiten ausgewählt. Bei einem in Fig. 2 wiedergegebenen, illustrativen Beispiel wird der Beginn der Einspritzung der Hauptkraftstoffmenge durch eine strichpunktiert gezeichnete Einspritzbeginnkurve (Hᵤ₁) festgelegt, die linear fallend parallel über der zugehörigen unteren Grenzkurve (Hᵤ) verläuft, wobei der Einspritzbeginn bei motorlastfreiem Betrieb knapp über 40°KW und bei einer Motorlast (L) von 80% der Vollast (VL) bei etwa 90°KW vor dem oberen Totpunkt liegt. Das Ende der Einspritzung der Hauptkraftstoffmenge wird durch eine horizontale Kurve (H_{O1}) festgelegt, die in diesem Beispiel identisch mit der unteren Grenzkurve (Zᵤ) der Zündkraftstoffmengeneinspritzung ist und folglich bei etwa 34°KW vor dem oberen Totpunkt liegt. Der Beginn der anschließenden Zündkraftstoffmengeneinspritzung wird durch eine horizontal verlaufende, punktiert wiedergegebene Einspritzbeginnkurve (Zᵤ₁) markiert und liegt bei knapp über 25°KW. Dies entspricht einem Abstand zwischen Ende der Hauptkraftstoffmengeneinspritzung und Beginn der Zündkraftstoffmengeneinspritzung von etwa 1/20 des gesamten Kompressionshubes. Das Ende der Zündkraftstoffmengeneinspritzung liegt bei diesem Beispiel bei etwa 20°KW vor dem oberen Totpunkt, wie durch eine zugehörige, ebenfalls punktiert gezeichnete Kurve (Zₒ₁) markiert ist. Das Zünden des eingespritzten Kraftstoffs über die Zündkerze (5) erfolgt während der Zeitdauer der Zündkraftstoffmengeneinspritzung oder kurz danach.

Das beschriebene Beispiel einer konkreten Einspritzsteuerung beinhaltet folglich, daß die Einspritzung der Zündkraftstoffmenge relativ kurz nach dem Ende der Hauptkraftstoffmengeneinspritzung erfolgt, was auch für im übrigen gegenüber diesem Beispielsfall modifizierte Gestaltungen des Einspritzvorgangs von Vorteil ist. Die Einspritzung der Hauptkraftstoffmenge kann in dem jeweils motorlastabhängig gewählten Zeitraum kontinuierlich oder alternativ dazu intermittierend in mehreren Einspritzstößen erfolgen.

Es versteht sich, daß neben dem konkret erwähnten Beispiel eines gesteuerten Einspritzvorgangs letzterer auch auf beliebige andere Weise in Form einer Hauptkraftstoffmengeneinspritzung und einer dagegen zeitversetzten, späteren Zündkraftstoffmengeneinspritzung im Rahmen der in Fig. 2 vorgegebenen Grenzkurven (Hᵤ, Hₒ, Zᵤ, Zₒ) durchgeführt werden kann, um in optimaler Weise ein mindestens annähernd stöchiometrisches Kraftstoff/Luft-Gemisch mit hohem Strömungszustand bereitzustellen, das zuverlässig durch Fremdzündung entflammt werden kann. Es versteht sich, daß die Erfindung nicht nur wie beschrieben für Hubkolbenmotoren, sondern auch für andere Motorarten, z.B. für Kreiskolbenmotoren, einsetzbar ist, wobei die Maßeinheit °KW passend zu übertragen ist.

## Patentansprüche

1. Verfahren zum Betrieb eines fremdgezündeten 4-Takt-Verbrennungsmotors im Schichtbetrieb, bei dem
- während einer jeweiligen Kompressionshubphase zunächst eine Hauptkraftstoffmenge und danach eine Zündkraftstoffmenge direkt in einen Brennraum eingespritzt werden,
- wobei mit der Einspritzung der Hauptkraftstoffmenge nicht vor Ablauf eines durch eine Grenzkurve (Hᵤ) bestimmten Teils des gesamten Kompressionshubes begonnen wird, der wenigstens etwa 3/10 des gesamten Kompressionshubes beträgt, und der Beginn der Einspritzung der Hauptkraftstoffmenge motorlastabhängig mit fallender Motorlast später erfolgt, so dass die Schichtung der Haupteinspritzmenge an den Bereich der Schichtung der Zündeinspritzmenge angrenzt oder mit diesem überlappt.

2. Verfahren nach Anspruch 1, weiter
**dadurch gekennzeichnet, daß**
mit der Einspritzung der Zündkraftstoffmenge nicht vor Ablauf von wenigstens etwa 7/9 des gesamten Kompressionshubes begonnen wird.

3. Verfahren nach Anspruch 1 oder 2, weiter
**dadurch gekennzeichnet, daß**
der Abstand zwischen dem Ende der Hauptkraftstoffmengeneinspritzung und dem Beginn der Zündkraftstoffmengeneinspritzung kleiner als etwa 1/10 des gesamten Kompressionshubes ist.

4. Verfahren nach einem der Ansprüche 1 bis 3, weiter
**dadurch gekennzeichnet, daß**
die Zündung des Kraftstoff/Luft-Gemischs während oder kurz nach der Einspritzung der Zündkraftstoff vorgenommen wird.

## Claims

1. Process for operating a spark ignition four-stroke internal combustion engine in stratified charge mode, in which
- at first, a main quantity of fuel and then an ignition quantity of fuel are injected directly into the combustion chamber, during a given compression stroke time period, whereby
- the injection of the main quantity of fuel does not start before the end of a proportion, of the whole compression stroke, which is determined by a limiting curve (C_{L}), this proportion being at least 3/10 of the full compression stroke and commencement of injection of the main fuel quantity occurs subsequently, with falling motor loading, and is dependent on the loading on the motor, such that the stratification of the main fuel quantity adjoins or overlaps the stratification of the ignition fuel quantity.

2. Process in accordance with claim 1, further
**characterized in that**
injection of the quantity of ignition of fuel does not start before at least some 7/9 of the compression stroke has occurred.

3. Process in accordance with claim 1 or 2, further
**characterized in that**
the interval between the end of injection of the main quantity of fuel and the start of injection of the quantity of ignition fuel amounts to less than 1/10 of the whole compression stroke.

4. Process in accordance with one of claims 1 to 3, further
**characterized in that**
the ignition ot the fuel/air mixture occurs either during or shortly after the injection of the quantity of ignition fuel.

## Revendications

1. Procédé de fonctionnement d'un moteur à combustion interne à quatre temps à allumage commandé en fonctionnement de stratification, dans lequel:
- tout d'abord une quantité de carburant principale et ensuit une quantité de carburant d'allumage sont injectées directement dans une chambre de combustion pendant une phase de course de compression respective, et dans lequel
- l'injection de la quantité de carburant principale ne commence pas avant d'avoir parcouru une certaine partie, déterminée par une courbe limite (Hᵤ), de la totalité de la course de compression, partie qui s'élève au moins à environ 3/10 de la totalité de la course de compression, et le début de l'injection de la quantité de carburant principale s'effectue plus tard en fonction de la charge du moteur, lorsque la charge du moteur chute, de sorte que la stratification de la quantité injectée principale est adjacente á la plage de la stratification de la quantité injectée d'allumage, ou bien est en superposition avec celle-ci.

2. Procédé selon la revendication 1, **caractérisé en outre en ce que** l'injection de la quantité de carburant d'allumage ne commence pas avant au moins environ 7/9 de la totalité de la course de compression ont été effectuée.

3. Procédé selon l'une ou l'autre des revendications 1 et 2, **caractérisé en outre en ce que** l'intervalle entre la fin de l'injection de la quantité de carburant principale et le début de l'injection de la quantité de carburant d'allumage est inférieur à environ 1/10 de la totalité de la course de compression.

4. Procédé selon l'une ou l'autre des revendications 1 à 3, **caractérisé en outre en ce que** l'allumage du mélange carburant/air s'effectue pendant ou peu après l'injection de la quantité de carburant d'allumage.
